# EUROPEAN PATENT SPECIFICATION

(11) **EP 2 130 475 B1**
(45) Date of publication and mention of the grant of the patent: **25.01.2012**
(21) Application number: 09011238.4
(22) Date of filing: 24.07.2007
(51) Int. Cl.: A47L 9/00, A01G 1/12

(54) **Debris collector**
Schmutzsammeleinrichtung
Collecteur de débris

(30) Priority: 31.07.2006 GB 0615212
(43) Date of publication of application: 09.12.2009
(62) Divisional of application: 07252928.2
(73) Proprietor: Husqvarna UK Limited, County Durham, DL5 6UP (GB)
(72) Inventor: Smith, Ian Zetterstrom, North Yorkshire YO7 2LJ (GB); Duffy, Colin, County Durham, DL16 7BW (GB)
(74) Representative: Finkele, Rolf

(56) References cited:
- EP-A- 1 442 653
- EP-A2- 0 792 578
- DE-A1- 19 549 419
- US-A- 3 683 446
- US-A- 4 074 458
- US-A- 5 477 585
- US-A1- 2004 221 416

## Description

This invention relates to an apparatus for collecting debris including grass cuttings, vegetation, fallen leaves and other rubbish frequently encountered on gardens, public highways and parklands.

Our European Patent 501675 describes a collection device comprising a chassis, means for supporting the device above ground datum, an impeller for establishing a flow of air, a duct directly or indirectly supported on the chassis for conveying loose material entrained in a stream of air from said source towards a downstream region thereof from a collection mouth at an upstream end thereof, a removable collection container for collecting said loose material and disposed in proximity to the downstream region of the duct, at least one air outlet disposed adjacent the collection mouth, each aperture serving to direct at least a portion of the stream of air downstream of the collection mouth so as to draw loose material into the mouth and transport the same via the duct into the collection container.

An improved version of this type of collection device can be operated in either a "vac" mode, In which the Impeller sucks in air from the collection mouth together with entrained debris, and a "blow'" mode in which air is directed from the impeller towards the collection mouth via a dedicated passageway so that the debris collector can be used to blow debris into suitable heaps for subsequent collection. This modified form of debris collector includes a rotary valve for diverting the stream of air from the impeller either to a debris collection bag or to the dedicated "blow" passageway. An example of such a collection device, using a rotary valve, is disclosed in the US patent 5,477,585.

One disadvantage of this arrangement is that the rotary valve is bulky, and increases the overall size of the debris collector. Moreover, because of the configuration of the rotary valve debris tends to adhere thereto, which reduces the efficiency of debris collection, and requires frequent cleaning. Unfortunately, the rotary valve is difficult to access, so cleaning is difficult if not impossible without dismantling the debris collector.

The present invention provides a debris collector according to claim 1.

The invention will now be described in greater detail, by way of example, with reference to the drawings, in which:
Figure 1 is a perspective view of a debris collector constructed in accordance with the invention;
Figure 2 is a schematic side elevation of the debris collector in the "vac" mode;
Figure 3 is a view similar to Figure 2, but showing the debris collector in the "blow" mode;
Figure 4 is a perspective view of the proximal end portion of the debris collector, showing its motor housing partially pivoted away from its main body;
Figure 5 is a view similar to that of Figure 4, but showing the motor housing pivoted fully away from the main body;
Figure 6 shows the distal end of the debris collector with its secondary tube telescoped within its primary tube;
Figure 7 is a view similar to that of Figure 6, but shows the secondary tube fully telescoped out of the primary tube;
Figure 8 shows the locking of the primary and secondary tubes in the fully telescoped position; and
   Figure 9 is a perspective view showing the air outlet path provided by the primary and secondary tubes in their fully telescoped configuration.

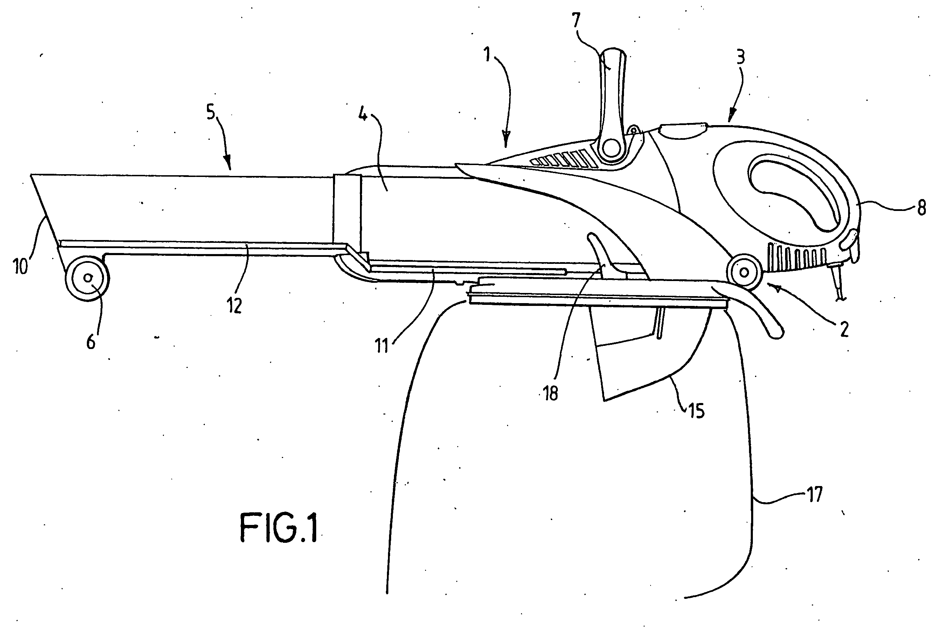

Referring to the drawings, Figure 1 shows a debris collector having a chassis 1 pivotally connected, at 2, to a housing 3. A primary duct 4 is fixed to the chassis 1, and a secondary duct 5 is telescopically mounted within the primary duct. A wheel 6 is provided at the distal end of the secondary tube 5. Handles 7 and 8 are associated respectively with the chassis 1 and the motor housing 3.

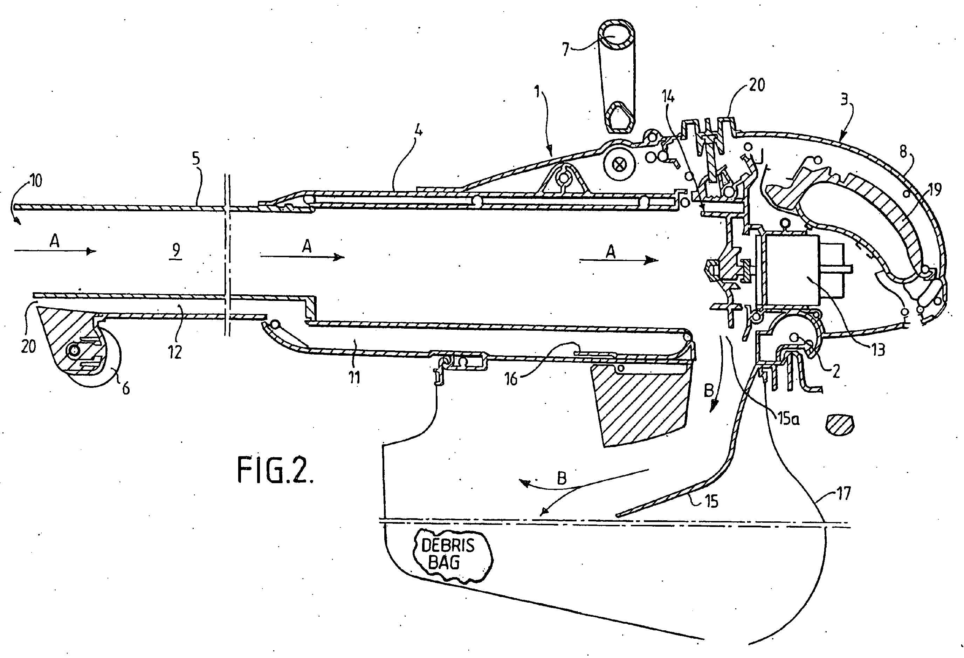

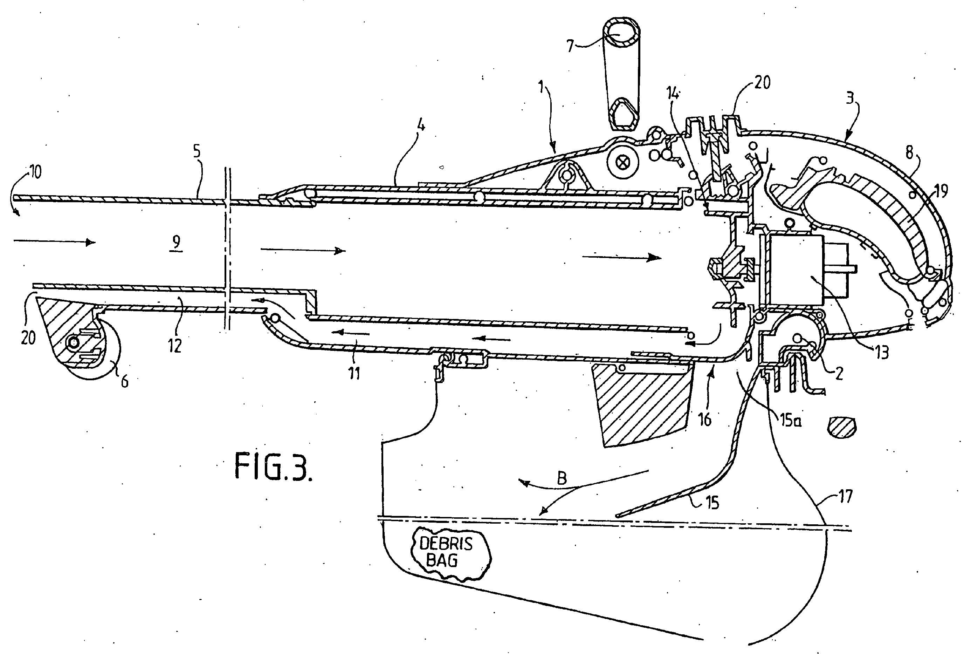

As shown in Figures 2 and 3, the telescoped primary and secondary ducts 4 and 5 define an internal duct 9 which leads from a collection mouth 10 at the distal end of the secondary duct towards the housing 3 provided at the proximal end of the collector. Contiguous passageways 11 and 12 are formed within the primary and secondary ducts 4 and 5.

The housing 3 houses an impeller 14 which is in drivable engagement with a motor 13. When the motor 13 is activated, the impeller 14 draws in a stream of air, via the collection mouth 10, as indicated by the arrows A. A nozzle 15 is formed on the chassis 1, the entrance 15a to the nozzle being in alignment with the impeller 14. A slide valve 16 is provided for controlling the flow of air from the impeller 14 to either the nozzle 15 or to the passageway 11. A debris bag 17 is fitted to the main body 1 to surround the outlet of the nozzle 15. A lever 18 is attached to the slide valve 16 for moving the slide valve between first and second operating positions.

When the slide valve 16 is in the first operating position (see Figure 2), the debris collector is in the "vac" mode. In this position, actuation of the motor 13, by means of a switch 19 provided on the handle 8 of the motor housing 3, causes the impeller 14 to draw a stream of air into the collector from the collection mouth 10 at the distal end of the secondary duct 5. Thus, if the collection mouth 10 is positioned adjacent to debris to be collected from the ground, the debris will be drawn in with the air stream A. As the slide valve 16 is positioned to close the passageway 11 and open the nozzle 15, the debris passes along the nozzle and into the debris bag 17 as indicated by the arrows B. Thus, the flow of air and debris from the impeller 14 to the debris bag 17 passes along smooth/tangential side walls defined by the nozzle 15, thereby reducing adherence of debris during its passage from the impeller to the debris bag. The motor 13 is rated to drive the impeller 14 at 13, 000 to 17,000 rpm, so that frangible debris striking the impeller is reduced in size, thereby increasing the storage capacity of the debris bag 17.

When the slide valve 16 is in the second operating position (see Figure 3), the debris collector is in the "blow" mode, in which case air from the impeller 14 is directed into the passageway 11, from where it passes along the passageway 12 and out of outlet 20 at the distal end of that passageway. In this position, the debris collector can be used to blow debris into suitable heaps for subsequent collection.

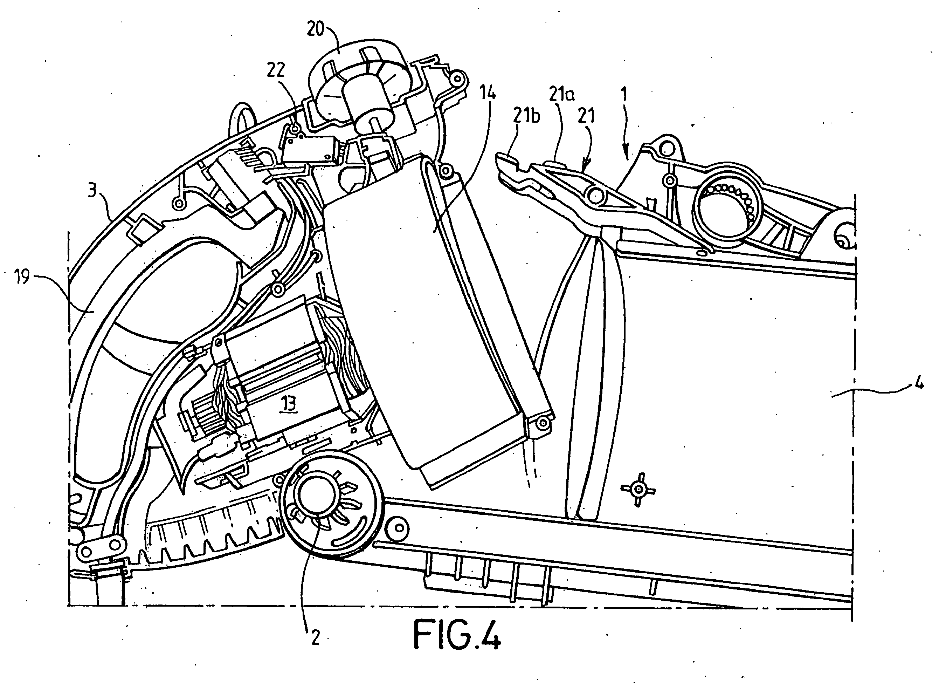

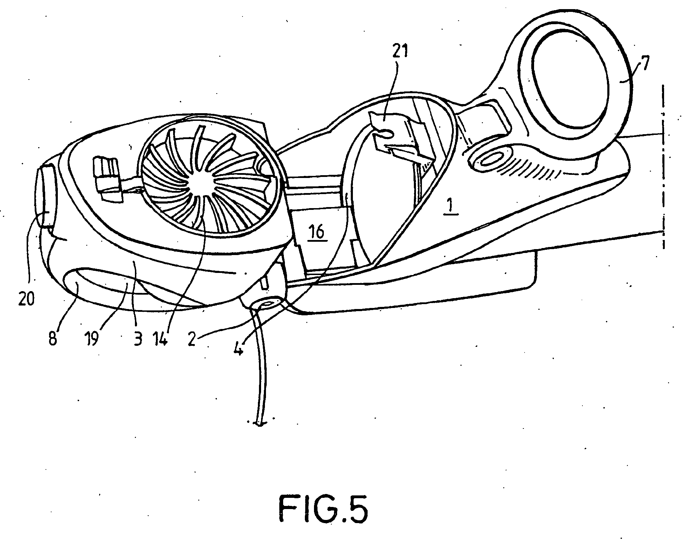

Figure 4 shows the pivotal connection between the chassis 1 and the housing 3, with the housing pivoted slightly away from the chassis. Figure 5 is similar to Figure 4, but shows the housing 3 fully pivoted away from the chassis 1. In this position, it will be apparent that both the impeller 14 and the slide valve 16 are easily accessible for cleaning, as is the proximal end of the primary tube 4 and the air outlet passage 11.

As best shown in Figure 4, the housing 3 is provided with a fixing bolt 20 which is engagable with an internally-threaded hollow stub shaft 21a of a flexible arm 21 fixed to the chassis 1 for locking the housing to the chassis when the debris collector is in the operational position shown in Figure 1. A microswitch 22 is associated with the fixing bolt 20, the arrangement being such that, in order to permit pivoting of the housing 3 relative to the chassis 1, the first two or three turns of the fixing bolt activate the microswitch 22, via an injection moulded location tab 21 b associated with the flexible arm 21, to turn the motor 13 off. As about ten turns of the fixing bolt 20 are needed to remove it from engagement with the flexible arm 21, this ensures that there is plenty of time for the impeller 14 to stop before an operator can access the interior of the debris collector.

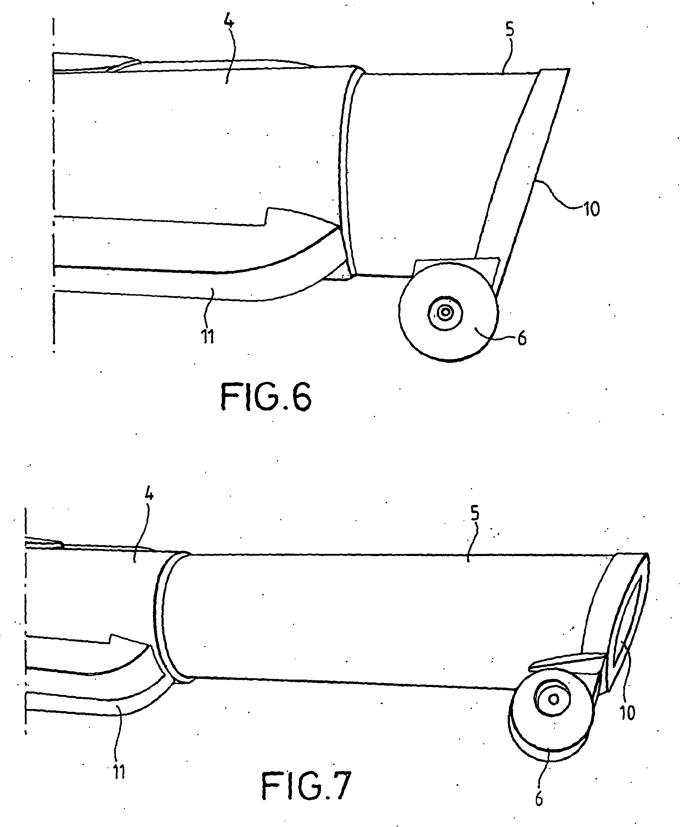

Figures 6 to 9 show the telescopic mounting of the secondary duct 5 within the primary duct 4. Thus, Figure 6 shows the secondary duct 5 fully telescoped within the primary duct 4. In this position, the debris collector can be packaged in a much smaller box than would be possible if the debris collector was provided at the point of sale with a single debris collection tube whose length is the same as the length of the fully telescoped out ducts 4 and 5.

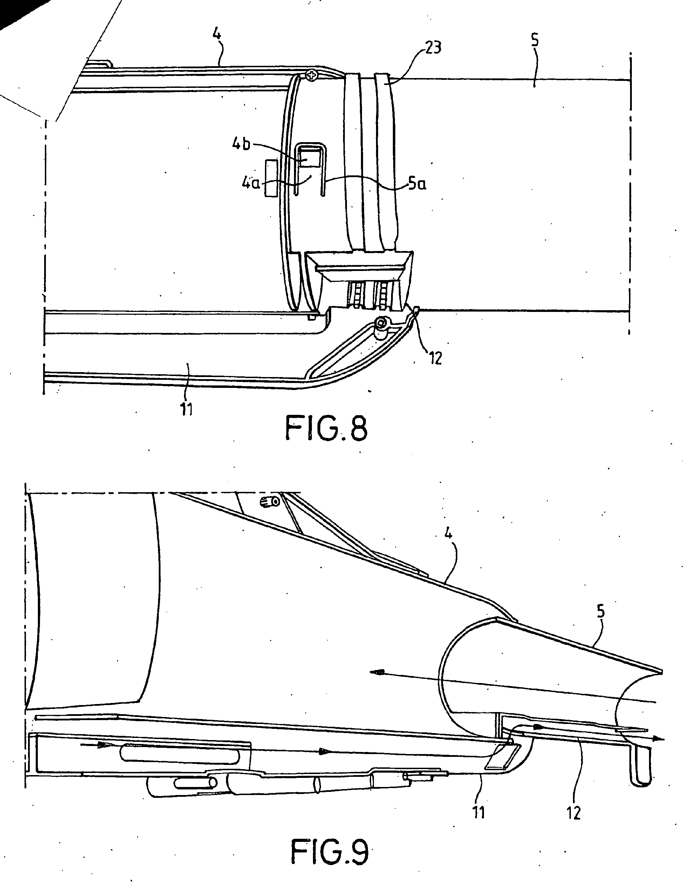

Figure 7 shows the ducts 4 and 5 in the fully telescoped out position, and Figure 8 shows how the ducts 4 and 5 are locked together in this fully telescoped out position. Thus, as shown in Figure 8, the secondary duct 5 is provided with an aperture 5a at its proximal end, and the primary duct 4 is provided with a flexible tab 4a having an outwardly-extending flange 4b which is engageable within the aperture 5a of the secondary duct 5. The two ducts 4 and 5 are formed with complementary screw threads, indicated generally by the reference numeral 23, the arrangement being such that, when the secondary duct is fully extended and rotated relative to the primary duct, the tab 4a snaps into position with the flange 4b abutting one end of the aperture 5a, thereby locking the two ducts together. The passageways 11 and 12. formed respectively outside the primary duct 4 and inside the secondary duct 5, are positioned so that the distal end of the passageway 5 is contiguous with the proximal end of the passageway 12 (see also Figure 9) when the two ducts are in the locked position. This arrangement ensures that, when the two ducts 4 and 5 are locked together in the operating position, the passageways 11 and 12 are contiguous, thereby defining the "blow" passageway from the impeller 14 to the distal end of the debris collector.

## Claims

1. A debris collector comprising:
a chassis (1);
an impeller (14) for establishing a flow of air;
a duct (4,5) supported by the chassis (1) for conveying loose material entrained in a stream of air generated by the impeller (14) towards a proximal region of the duct (4,5) from a collection mouth (10) at a distal end thereof;
a removable collection container (17) for collecting the loose material;
an air passageway (11,12) leading from the impeller (14) to the collection mouth (10),
the air passageway (11,12) being separate from the duct (4,5); and a slide valve (16) for directing the stream of air from the impeller (14) either into the removable collection container (17) or into the air passageway (11,12);
**characterized in that** the slide valve (16) is movable between two positions in a substantially linear manner and that the slide valve defines a substantial smooth air-stream-engaging surface.

2. A debris collector according to claim 1, wherein the slide valve (16) is mounted in the chassis (1) for movement between a first position, in which the air stream passes from the impeller (14) into the air passageway, and a second position, in which the air stream passes from the impeller into the removable collection (17) container.

## Patentansprüche

1. Schmutzsammeleinrichtung, umfassend:
ein Gehäuse (1);
ein Gebläserad (14) zum Herstellen einer Luftströmung;
ein Rohr (4, 5), das vom Gehäuse (1) gehalten wird, zum Befördern von losem Material, das in einem Luftstrom, der von dem Gebläserad (14) erzeugt wird, mitgerissen wird, in Richtung eines proximalen Bereichs des Rohrs (4, 5) von einer Aufnahmeöffnung (10) an einem distalen Ende desselben;
einen abnehmbaren Sammelbehälter (17) zum Sammeln des losen Materials;
einen Luftkanal (11, 12), der von dem Gebläserad (14) zur Aufnahmeöffnung (10) führt,
wobei der Luftkanal (11, 12) von dem Rohr (4, 5) getrennt ist; und
einen Schieber (16) zum Leiten des Luftstroms vom Gebläserad (14) entweder in den abnehmbaren Sammelbehälter (17) oder in den Luftkanal (11, 12);
**dadurch gekennzeichnet, dass** der Schieber (16) zwischen zwei Positionen auf im Wesentlichen lineare Weise beweglich ist und dass der Schieber eine im Wesentlichen glatte den Luftstrom berührende Oberfläche definiert.

2. Schmutzsammeleinrichtung nach Anspruch 1, wobei der Schieber (16) im Gehäuse (1) für eine Bewegung zwischen einer ersten Position, in der der Luftstrom vom Gebläserad (14) in den Luftkanal gelangt, und einer zweiten Position, in der der Luftstrom vom Gebläserad in den abnehmbaren Sammelbehälter (17) gelangt, montiert ist.

## Revendications

1. Collecteur de débris comprenant :
un châssis (1) ;
une roue à ailettes (14) pour établir une circulation d'air ;
une conduite (4, 5) supportée par le châssis (1) pour transporter de la matière en vrac entraînée dans un flux d'air généré par la roue à ailettes (14) vers une région proximale de la conduite (4, 5) depuis une entrée de collecte (10) à une extrémité distale de celle-ci ;
un conteneur de collecte amovible (17) pour collecter la matière en vrac ;
un passage d'air (11, 12) allant de la roue à ailettes (14) à l'entrée de collecte (10),
le passage d'air (11, 12) étant séparé de la conduite (4, 5) ; et
une soupape à tiroir (16) pour diriger le flux d'air de la roue à ailettes (14) soit dans le conteneur de collecte amovible (17) soit dans le passage d'air (11, 12) ;
**caractérisé en ce que** la soupape à tiroir (16) est mobile entre deux positions de manière essentiellement linéaire et **en ce que** la soupape à tiroir définit une surface d'engagement de flux d'air essentiellement lisse.

2. Collecteur de débris selon la revendication 1, dans lequel la soupape à tiroir (16) est montée dans le châssis (1) pour un mouvement entre une première position, dans laquelle le flux d'air passe de la roue à ailettes (14) au passage d'air, et une seconde position, dans laquelle le flux d'air passe de la roue à ailettes au conteneur de collecte amovible (17).
